# EUROPEAN PATENT SPECIFICATION

(11) **EP 2 369 192 B1**
(45) Date of publication and mention of the grant of the patent: **03.07.2013**
(21) Application number: 11001932.0
(22) Date of filing: 09.03.2011
(51) Int. Cl.: F16C 29/00

(54) **Linear motion double guide unit device and relative production process**
Doppelsteuereinheit mit linearer Bewegung und entsprechendes Produktionsverfahren
Dispositif à double unité de guidage avec mouvement lineaire et procédé de fabrication

(30) Priority: 15.03.2010 IT TO20100195
(43) Date of publication of application: 28.09.2011
(73) Proprietor: SETEC S.p.A., 10129 Torino (TO) (IT)
(72) Inventor: Seminatore, Fabio, 10129 Torino (IT)
(74) Representative: Aprà, Mario

(56) References cited:
- WO-A1-02/060641
- DE-U1- 9 011 851

## Description

The present invention relates to a linear motion double guide unit device, with linear motion integrated drive. The invention also relates to the production process of this device.

From the document EP0340751B1 there is known a linear motion single guide unit device. This known device comprises a hollow structural element extending according to a longitudinal axis, hereinafter called beam, and having a bottom wall and two lateral walls, which delimit a guide cavity. The aforesaid linear motion single guide unit also comprises a rectilinear guide, called single rail guide, parallel to said axis and secured on the bottom wall inside the guide cavity. A slide assembly is superimposed and mounted sliding along said single rail guide and includes an upper carriage part and at least one lower saddle, integral with said carriage and engaged for sliding with respect to the single rail guide. In said linear guide unit there are provided linear movement control and drive means for displacement of the slide assembly in the direction of the longitudinal axis along the rectilinear guide.

According to a first embodiment, said control and drive means comprise a flexible traction member, for example a toothed belt, which starting from one longitudinal end of the carriage, to which it is secured, partially surrounds two guide pulleys respectively provided in proximity of each of the two ends of the guide beam, with essentially transverse axis. Said flexible member is also secured to said carriage, with the other end thereof, in a closed loop configuration. Rotation control means, for example an electric gear motor, are kinematically connected to one of said pulleys, while the other pulley is mounted idle. According to another embodiment, said control and drive means comprise a screw/nut screw mechanism, wherein the screw extends in the longitudinal direction of the guide beam, is mounted axially fixed and rotating with respect to said beam and is kinematically connected with respect to rotation drive means, for example electric gear motor means. Said screw is engaged by helical coupling with respect to a nut screw, for example of the type with internally threaded nut, secured with respect to the slide assembly.

Moreover, the patent application no. TO2009A000938 of 30.11.2009, by the same applicant, discloses a further embodiment of said control and drive means for displacement of said slide assembly with respect to said single rail rectilinear guide means. These control and drive means include rack means, extending in said guide cavity parallel to said longitudinal axis, and a drive unit including pinion means meshed with respect to said rack means and controlled in rotation by means of rotation driving means. Said rack means are, for example, secured with respect to a wall of said linear guide hollow beam and project with a toothed part thereof inside said guide cavity, while said pinion means are supported by said slide assembly.

On the other hand, a linear motion double guide unit device is also known. This known double guide unit device comprises a beam element, produced in one piece, extending according to a longitudinal axis and having two longitudinal guide cavities, adjacent and parallel to said axis, and two respective single rail rectilinear guides, each secured parallel to said axis on the bottom wall of a corresponding guide cavity. A slide assembly is superimposed and mounted sliding along the two rectilinear guides and includes a single upper carriage part and at least two lower saddles, integral with said carriage and each engaged by sliding along a respective rail rectilinear guide.

This known linear motion double guide unit device comprises its own control and drive means, of the type with toothed belt on pulleys or of the screw and nut screw type as described above, for displacement of the corresponding slide assembly with respect to the two single rail rectilinear guides.

The aforesaid known linear motion double guide unit device is advantageously used when the load is applied in a cantilever fashion with respect to the guide unit. In fact, a load of this kind generates an overturning moment on the single rail guide. This overturning moment, if applied to a single guide unit device, besides causing possible structural failure of the lower saddle of the slide assembly, considerably reduces the working life of the device. However, in a double guide unit device, in the presence of a cantilevered load, the two single rail rectilinear guides and the respective lower saddles of the slide assembly efficiently counteract the overturning moment applied and are mainly subjected to tensile and compression stress, working in an optimal condition. Therefore, the operating precision and working life of the device are considerably increased.

However, the aforesaid known linear motion double guide unit device has the drawback that the beam body with double guide cavity and the relative slide assembly are each conceived and produced as a structurally single entity and therefore are not modularly mountable: this fact leads to a relatively high technical and economic expenditure.

Starting from the notion of the aforesaid drawback, the present invention intends to provide a remedy.

An object of the invention is to provide a linear motion double guide unit device, with linear motion integrated drive, in which both the beam body with double guide cavity and the relative slide assembly are each modularly mountable, so as to make the device structurally simplified and versatile in use.

Another object of the present invention is to provide a linear motion double guide unit device, with linear motion integrated drive, which has safe and reliable operation, which is easy to perform maintenance on and which has relatively limited costs.

Yet another object of the invention is to provide a production process of the aforesaid device, which allows simplification of the machining steps and of any maintenance of the device, with consequent reduction in technical and economic expenditure.

In view of these objects, the present invention provides a linear motion double guide unit device, with linear motion integrated drive, the fundamental characteristic of which is described in claim 1.

The fundamental characteristic of the process according to the invention is described in claim 7.

Further advantageous characteristics are described in the dependent claims.

The aforesaid claims are intended as fully incorporated herein. The present invention will be more apparent from the detailed description below, with reference to the accompanying drawing, provided purely by way of non-limiting example, wherein:

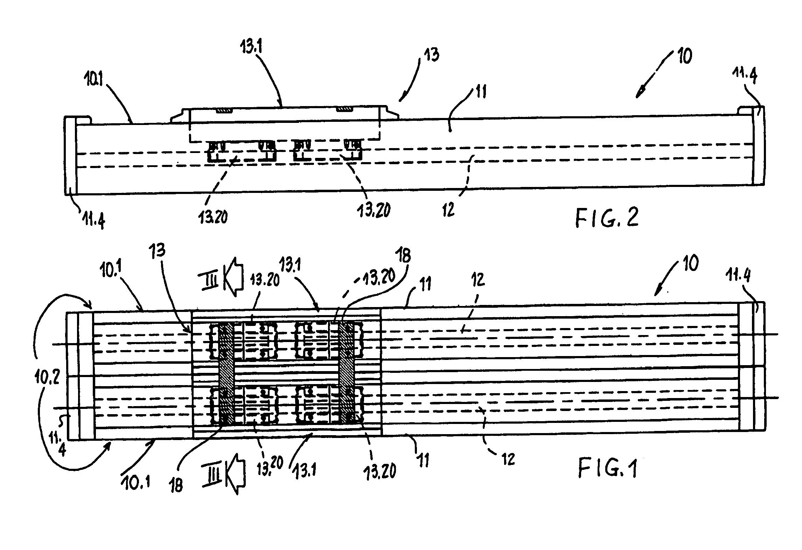

- Fig. 1 is a top plan view of the linear motion double guide unit device according to an example of embodiment of the present invention,
- Fig. 2 is a front elevation view of the device according to Fig. 1.

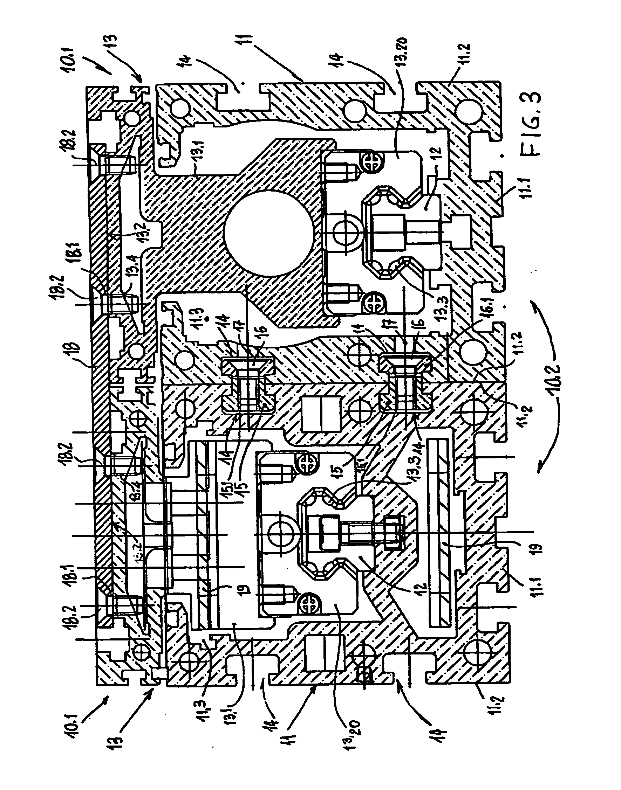

- Fig. 3 is a cross-sectional view in a larger scale according to the line III-III of Fig. 1, showing the aforesaid device with linear motion control and drive means integrated according to a first exemplary embodiment,

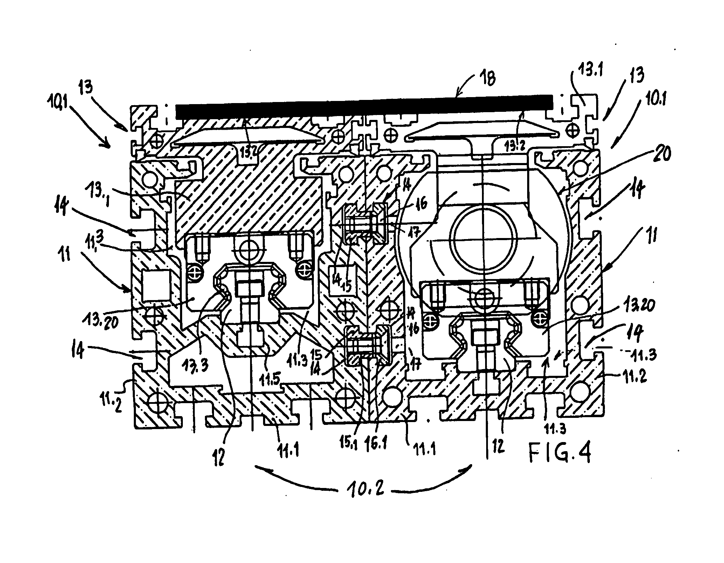

- Fig. 4 is a cross-sectional view in a different scale of the aforesaid device, showing the same device with linear motion control and drive means integrated according to a second exemplary embodiment,

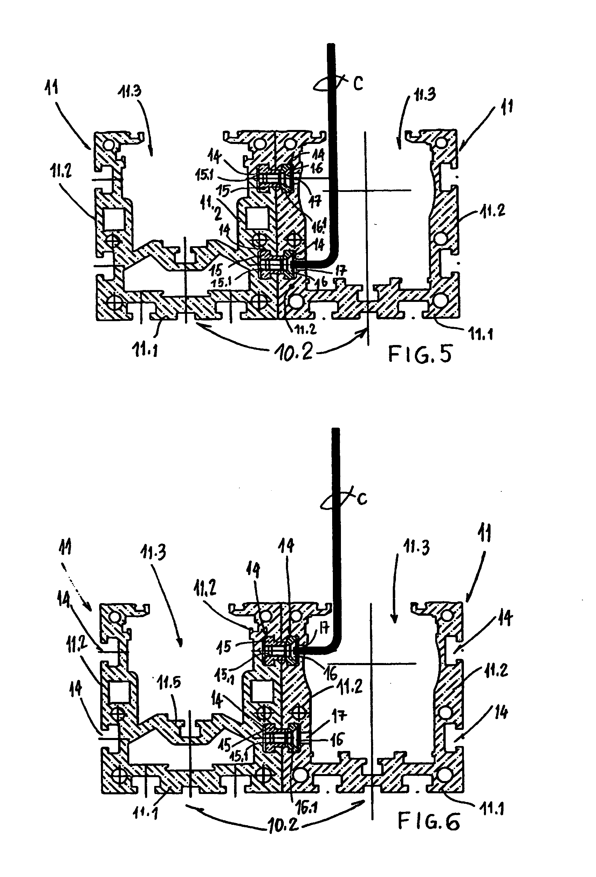

   Fig. 5 is a cross-sectional view of a structural body of the device according to the invention, comprising two hollow linear guide beams, substantially identical, which are juxtaposed and secured side by side, in demountable manner, according to a first step of a first phase of implementation of the production process of the device according to the present invention,
- Fig. 6 is a view similar to the view of Fig. 5, but showing a second step of said first phase of the production process of the device according to the invention,

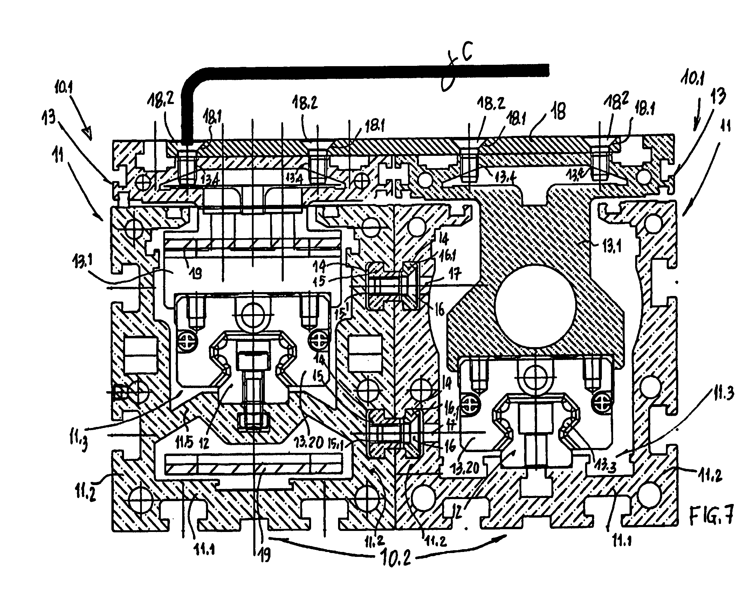

- Fig. 7 is a view similar to the view of Fig. 3, but showing a second phase of the production process of the device of the present invention.

The accompanying drawings show, purely by way of example, two different embodiments relative to the linear motion double guide unit device of the invention. However, as already stated, these different embodiments of said device differ from each other only in relation to the respective control and drive means for linear displacement of a slide assembly with respect to corresponding single rail rectilinear guide means. Therefore, principally, the description below refers to the device according to the invention, regardless of the particular embodiment of said control and drive means. Nonetheless, a brief description of the different embodiments of said control and drive means is provided below.

With reference to the drawings, the linear motion double guide unit device, with linear motion integrated drive, according to the invention is indicated as a whole with 10.

Said device 10 includes two linear motion guide units 10.1 mutually coupled in parallel and comprises, in particular, a structural body 10.2, wherein two hollow linear guide beams 11, substantially identical, are mutually juxtaposed and secured side by side, in demountable manner, and extend parallel according to a longitudinal axis. Each hollow linear guide beam 11 has a substantially horizontal bottom wall 11.1 and two substantially vertical lateral walls 11.2, which delimit a guide cavity 11.3. In particular, each linear guide beam 11 is formed by a single piece body, with a substantially equilateral U-shaped cross section, obtained by extrusion. Moreover, said single piece body is closed at the longitudinal ends thereof by means of respective heads 11.4.

It will be noted that each linear motion guide unit forms a structurally autonomous entity and comprises a respective beam of said two hollow linear guide beams 11. Each linear guide beam 11 comprises, in turn, a single rail rectilinear guide 12, extending parallel to said longitudinal axis and secured, in demountable manner, with respect to the bottom wall 11.1, along the longitudinal vertical median plane of the unit.

In each linear motion guide unit 10.1, a corresponding slide assembly 13 is mounted sliding along the respective single rail guide 12. Each slide assembly 13 forms a structurally autonomous entity and includes an upper carriage part 13.1 and two lower saddles 13.20 integral with said carriage 13.1 and engaged by sliding with respect to the respective single rail rectilinear guide 12. Ball races 13.3 are provided in each of said saddles 13.20 in an arrangement partly surrounding said rectilinear guide 12.

Each linear guide beam 11 has, on the outer lateral face of each of the two longitudinal lateral walls 11.2, a respective pair of assembly grooves 14, extending for the entire length parallel to said longitudinal axis, mutually staggered in height, with an opening on the respective lateral wall 11.2 and wherein the area of the cross section of each groove 14 has a trend increasing toward the inside of the beam In the example shown, each groove 14 has a cross section substantially in the shape of a "T" lying on its side.

In the two linear motion guide units 10.1 mutually coupled in parallel, the two hollow linear guide beams 11 have the assembly grooves 14 in opposed pairs and with their respective openings substantially mating.

In each of said two longitudinal grooves 14 of a first of said two juxtaposed linear guide beams 11 there is housed with clearance a respective longitudinal key 15, formed by a metal profile, with cross section substantially in the shape of a "T" lying on its side and of a length essentially corresponding to that of said first linear guide beam 11. Said key 15 has a shape complementary to that of said groove 14 in which it is inserted and is prevented from extraction in the transverse direction of the same groove. In said key 15 there is provided an arrangement of threaded holes 15.1, whose axes are mutually spaced in longitudinal direction according to a constant pitch and are directed parallel to the transverse direction with respect to said groove 14 in which the key 15 is inserted. In said threaded holes 15.1 there are partially screwed the stems of corresponding assembly screws 16, which with the remaining part of their stem and their head partially occupy the opposite groove 14 in the other of said two juxtaposed linear guide beams 11.

Moreover, in the opposed lateral wall 11.2 of the other of said two juxtaposed linear guide beams 11, along the two respective grooves 14 there are provided corresponding arrangements of mounting through holes 17, with transverse axis and which communicate, on the one side, with the guide cavity 11.3 of said other linear guide beam 11 and, on the other side, with the relative groove. The axes of said holes 17 of each arrangement are mutually spaced in longitudinal direction according to a constant pitch, corresponding to that of the axes of the holes 15.1 of a key 15. The holes 17 of each arrangement correspond axially to the heads of said screws 16 that engage the groove 14, in which the same holes emerge. Between the head of each screw 16 and the groove 14 in which said head is housed there is interposed a corresponding washer 16.1. Said assembly screws 16 appropriately clamped mutually secure said two hollow linear guide beams 11, connecting them together in integral coupling and in parallel according to said longitudinal axis, producing a single structural body 10.2.

Moreover, said slides 13 of the two units 10.1 of the device 10 according to the invention are also mutually coupled, side by side, in parallel and integrally, through a pair of transverse blocks 18, arranged bridging the slides 13 and secured with respect to the same in demountable manner.

For this purpose, each slide 13 has, in the upper face of the carriage 13.1 thereof, a pair of transverse grooves 13.2 extending for the entire width thereof. In each groove 13.2 there is inserted, through positive connection, a corresponding end of a respective transverse block 18, arranged bridging the two coupled slide assemblies 13 and formed by a metal bar provided with assembly through holes 18.1 with axis essentially vertical and corresponding, for position, with respective through holes 13.4 provided in each carriage 13.1 of the same slide 13. Corresponding assembly screws 18.2 are inserted, through said holes 18.1 of the blocks 18 and are clamped in said holes 13.4, so as to make said same slide assemblies 13 mutually integral by means of said blocks 18 thus secured.

According to the present invention, said linear motion control and drive means are provided only in one of said linear motion guide units 10.1, as will be more apparent below.

### Embodiments of the linear motion control and drive means

According to a first embodiment, said control and drive means are provided in a first of said linear motion guide units 10.1 and comprise a flexible traction member 19, for example with toothed belt, which starting from one longitudinal end of the carriage 13.1, to which it is secured, partially surrounds two guide pulleys (not shown) respectively provided in proximity of each of the two ends of the corresponding linear guide beam 11, with essentially transverse axis. Said flexible member 19 is further secured to said carriage 13.1, with the other end thereof, forming a closed loop. Rotation control means (not shown), for example an electric gear motor, are kinematically connected to one of said pulleys, while the other pulley is mounted idle.

According to another embodiment, said control and drive means are provided in a first of said linear motion guide units 10.1 and comprise a screw/nut screw mechanism 20, wherein the screw extends in the longitudinal direction of the corresponding linear guide beam 11, is mounted axially fixed and rotating with respect to said beam and is kinematically connected with respect to rotation drive means, for example electric gear motor means (not shown). Said screw is engaged by helical coupling with respect to a nut screw, for example of the type with internally threaded nut, secured with respect to the respective slide assembly 13 of said first guide unit 10.1.

Moreover, as taught by the patent application no. TO2009A000938 of 30.11.2009, by the same applicant, a further embodiment of said control and drive means for displacement of said slide assembly with respect to said single rail rectilinear guide means is also possible. These control and drive means include rack means, extending in said guide cavity parallel to said longitudinal axis, and a drive unit including pinion means meshed with respect to said rack means and controlled in rotation by means of rotation driving means. Said rack means are, for example, secured with respect to a wall of said linear guide hollow beam and project with a toothed part thereof inside said guide cavity, while said pinion means are supported by said slide assembly.

As is apparent from the above, said control and drive means for linear displacement of the corresponding slide 13 are provided in only one of the two linear motion guide units 10.1, whose slide 13 in turn drives with integral motion the slide 13 of the other coupled guide unit 10.1. It must be noted that in said other guide unit 10.1, without guide means, the structure of the respective slide 13 is structurally simplified and of lesser height. To compensate this reduction of height of the slide 13, in the beam 11 of said other linear unit 10.1 there is provided in an integral body a raised double bottom 11.5, on which the respective single rail guide 12 is secured in demountable manner. Operation of the double guide unit device 10 according to the present invention is apparent from the above. Therefore, further description thereof is omitted.

The production process of the linear motion double guide unit device according to the invention comprises the following assembly steps.

### First step:

A first part of the device 10 according to the invention is produced by mutually coupling in parallel two linear motion guide units 10.1 and, in particular, forming a structural body 10.2, wherein two hollow linear guide beams 11, substantially identical, are mutually juxtaposed and secured side by side, parallel according to a longitudinal axis, in demountable manner. For this purpose:
- there are produced two hollow linear guide beams 11, substantially identical to each other:
   - each comprising a substantially horizontal bottom wall 11.1 and two substantially vertical lateral walls 11.2, which delimit a guide cavity 11.3, and
   - each having, on at least an external face of a longitudinal lateral wall thereof 11.2, at least one assembly groove 14, which runs along the entire length thereof parallel to said longitudinal axis, has the opening thereof on said face and wherein the area of the cross section has a height increasing toward the inside of the same beam,

- said two hollow linear guide beams 11 are juxtaposed side by side, in parallel according to a longitudinal axis, so that the respective grooves 14 mutually correspond in pairs and the openings of the same grooves mate;
- there is produced a key 15 having a length substantially corresponding to that of each linear guide beam 11 and a shape corresponding to that of a respective groove of a first of said two juxtaposed linear guide beams 11, so as to be housed in said groove and to be prevented from extraction in the transverse direction of the same groove,
- said key 15 is provided with an arrangement of threaded holes 15.1, whose axes are mutually spaced according to a pitch in longitudinal direction,
- in said arrangement of threaded holes 15.1 there is mounted a corresponding arrangement of assembly screws 16, whose stems are respectively partially screwed in said threaded holes 15.1,
- while in the opposed lateral wall 11.2 of the other of said two juxtaposed linear guide beams 11, along each groove 14, there is provided a corresponding arrangement of mounting through holes 17, which communicate, on one side, with the guide cavity 11.3 of said other linear guide beam 11 and, on the other side, with the relative groove 14, and whose axes are mutually spaced in longitudinal direction according to a pitch that corresponds to that of the axes of the threaded holes 15.1 of said key 15,
- said key 15 is inserted in the respective groove 14 of said first linear guide beam 11, so that:
   - the screws 16 mounted in the same key are arranged according to axes parallel to the transverse direction with respect to said groove 14,
   - a part of the stem of each of said screws 16 is contained
      in said same groove 14, while substantially the remaining part of the stem and the head are housed in the opposite groove 14 located in the other of said juxtaposed linear guide beams 11,
   - the head of each of said screws 16 corresponds to a respective mounting through hole 17 provided in the other of said juxtaposed linear guide beams 11;
- a clamping key tool C is inserted into said guide cavity 11.3 of said other linear guide beam 11 and an appropriately shaped end thereof is made to pass through each of said mounting holes 17, so as to engage the corresponding head of one assembly screw 16 at a time, and
- operating said tool C each assembly screw 16 is appropriately clamped, so as to mutually connect said two juxtaposed hollow linear guide beams 11, coupling them integrally and in parallel according to said longitudinal axis, forming the structural body 10.2.

### Second step:

Moreover, the two slide assemblies 13 of the two units 10.1 of the device 10 according to the invention are mutually coupled, side by side, in parallel and integrally.

In particular, said two slide assemblies 13 are coupled by means of a pair of transverse blocks 18, arranged bridging the same slides and secured with respect thereto in demountable manner.

For this purpose, each slide assembly 13:
- is provided in the upper face of the carriage 13,1 thereof with at least one transverse groove 13.2;
- in each groove 13.2 there is inserted, through positive connection, a corresponding end of a respective transverse block 18, formed by a metal bar provided with assembly through holes 18.1 with axis essentially vertical and corresponding, for position, with respective through holes 13.4 provided in the carriage 13.1 of each slide assembly 13;
- assembly screws 18.2 are inserted, through said holes 18.1 of the blocks 16 and are clamped in said holes 13.4 in the carriage 13.1, by means of the key C, so as to make said same slide assemblies mutually integral.

As is apparent from the above, the linear motion double unit guide device, with linear motion integrated drive, according to the present invention and as claimed, allows the objects set forth above to be achieved in an advantageous manner.

Also the production process of the device according to the invention, as described above and as claimed, allows the relative object set forth above to be achieved in an advantageous manner.

## Claims

1. Linear motion double guide unit device, comprising a body extending according to a longitudinal axis and having two guide cavities (11.3) parallel to said axis, and two respective single rail rectilinear guides (12), each secured parallel to said axis on a wall (11.1) of a corresponding guide cavity (11.3) and comprising at least one slide assembly (13) mounted sliding along said two rectilinear guides (12) and including at least a carriage part (13.1) and at least two saddles (13.20) integral with said carriage and each engaged by sliding along a respective single rail rectilinear guide,
- **characterized in that**
it includes two linear motion single guide units (10.1) mutually coupled in parallel and each comprising:
- a hollow structural element (11) extending according to a longitudinal axis, hereinafter called linear guide beam (11), delimiting a respective guide cavity (11.3),
- a single rail rectilinear guide (12), parallel to said axis and secured on the bottom wall (11.1) inside said guide cavity (11.3), and
- a slide assembly (13) mounted sliding along said single rail guide (12) and including a carriage part (13.1) and at least one saddle (13.20), integral with said carriage and engaged for sliding with respect to said single rail guide,
and **in that**
said two linear motion single guide units (10.1) mutually coupled form a structural body (10.2), wherein said hollow linear guide beams (11) are mutually juxtaposed and secured side by side, in demountable manner, and extend parallel according to said longitudinal axis.

2. The device according to claim 1, **characterized in that**:
- each linear motion single guide unit (10.1) forms a structurally autonomous entity and comprises a respective of said two hollow linear guide beams (11);
- each linear guide beam (11) comprises a single rail rectilinear guide (12), extending parallel to said longitudinal axis and secured, in demountable manner, with respect to said bottom wall (11.1) of the same beam;
- in each linear motion single guide unit (10.1), a corresponding slide assembly (13) is mounted sliding along the respective single rail guide (12) and forms a structurally autonomous entity, including a carriage part (13.1) and at least one saddle (13.20), integral with said carriage (13.1) and engaged for sliding with respect to the corresponding single rail rectilinear guide (12).

3. The device according to claim 1 and/or 2, **characterized:**
- **in that** each linear guide beam (11) has, on an external lateral face of at least one of two longitudinal lateral walls thereof (11.2) delimiting said guide cavity (11.3), at least one assembly groove (14), extending for the entire length parallel to said longitudinal axis and having an opening on said external face,
- **in that** in said two linear motion single guide units (10.1) mutually coupled in parallel, said two hollow linear guide beams (11) have the respective assembly grooves (14) in opposed pairs and with their openings substantially mating,
- **in that**:
- in at least one longitudinal groove (14) of a first of said two juxtaposed linear guide beams (11) there is housed a respective longitudinal key (15), prevented from extraction in the transverse direction of the same groove,
- in said key (15) there is provided an arrangement of threaded holes (15.1), whose axes are mutually spaced in longitudinal direction and are directed parallel to the transverse direction with respect to said groove (14) in which the key (15) is inserted;
- in said threaded holes (15.1) there are partially screwed the stems of corresponding assembly screws (16), which substantially with the remaining part of their stem and their head partially occupy the opposite groove (14) in the other of said two juxtaposed linear guide beams (11);
and **in that**:
- in the opposed lateral wall (11.2) of the other of said two juxtaposed linear guide beams (11), along the groove (14) corresponding to that of said first linear guide beam (11) in which said key (15) is housed, there is provided an arrangement of mounting through holes (17), with transverse axis and which communicate, on the one side, with the guide cavity (11.3) of said other linear guide beam (11) and, on the other side, with the same groove (14);
- the axes of said holes (17) are mutually spaced in longitudinal direction, with pitch corresponding to that of the axes of the holes (15.1)of said key (15), and the holes (17) of each arrangement of holes correspond axially to the head of said screws (16) that engage the groove (14), in which the same holes emerge,
so that said assembly screws (16) appropriately clamped mutually secure said two hollow linear guide beams (11), connecting them together in integral coupling and in parallel according to said longitudinal axis, producing a single structural body (10.2).

4. The device according to one or more of the preceding claims, **characterized in that** said slide assemblies (13) of said two linear motion single guide units (10.1) are mutually coupled, side by side, in parallel and integrally, through means (18, 18.1, 18.2, 13.1, 13.2, 13.4) for joining the same in demountable manner.

5. The device according to claim 4, **characterized in that**:
- each slide assembly (13) has in the upper face of the carriage thereof (13.1) at least one groove (13,2);
- in each groove (13.2) there is inserted a corresponding end of a respective block (18), arranged bridging the two coupled slide assemblies (13) and provided with assembly through holes (18.1) with axis essentially vertical and corresponding, for position, with respective threaded holes (13.4) provided in each carriage (13.1) of the same slide assembly (13);
- corresponding assembly screws (18.2) are inserted, through said holes (18.1) of the blocks (18) and are clamped in said holes (13.4), so as to make said same slide assemblies (13) mutually integral by means of said blocks (18).

6. The device according to claim 4 and/or 5, **characterised in that** means (19, 20) to control and drive the linear motion are provided in only one of said two linear motion single guide units (10.1), whose slide assembly (13) drives with integral motion the slide assembly (13) of the other coupled guide unit (10.1).

7. A production process of a linear motion double guide unit device, with linear motion integrated drive, according to one or more of the preceding claims, **characterized in that** there are mutually coupled in parallel two linear motion single guide units (10.1), each comprising:
- a hollow structural element (11) extending according to a longitudinal axis, hereinafter called linear guide beam (11), delimiting a guide cavity (11.3),
- a single rail rectilinear guide (12), parallel to said axis and secured on the bottom wall (11.1) inside said guide cavity (11.3), and
- a slide assembly (13) mounted sliding along said single rail guide (12) and including a carriage part (13.1) and at least one saddle (13.20), integral with said carriage and engaged for sliding with respect to said single rail guide,
and there is formed a structural body (10.2), wherein said two hollow linear guide beams (11) are mutually juxtaposed and secured side by side, parallel according to a longitudinal axis, in demountable manner.

8. The process according to claim 7, **characterized in that** it comprises the steps wherein:
a) there are produced two hollow linear guide beams (11), in each of which:
- there are formed a bottom wall (11.1) and two lateral walls (11.2), which delimit a guide cavity (11.3), and
- on at least an external face of a longitudinal lateral wall thereof (11.2), there is formed at least one assembly groove (14), which runs along the entire length thereof parallel to said longitudinal axis and has the opening thereof on said face,
b) said two hollow linear guide beams (11) are juxtaposed side by side, in parallel according to said longitudinal axis, so that the respective grooves (14) mutually correspond in pairs and the openings of the pairs of grooves mate;
c) there is produced a key (15) having a length substantially corresponding to that of each linear guide beam (11) and a shape adapted to be housed in a respective groove (14) of a first of said two juxtaposed linear guide beams (11) and to be prevented from extraction in the transverse direction of the same groove,
d) said key (15) is provided with an arrangement of threaded holes (15.1), whose axes are mutually spaced in longitudinal direction,
e) in said arrangement of threaded holes (15.1) there is mounted a corresponding arrangement of assembly screws (16), whose stems are respectively partially screwed in said threaded holes (15.1),
f) in the opposed lateral wall (11.2) of the other of said two juxtaposed linear guide beams (11), along each groove (14), there is provided a corresponding arrangement of mounting through holes (17), which communicate, on one side, with the guide cavity (11.3) of said other linear guide beam (11) and, on the other side, with the relative groove (14), and whose axes are mutually spaced in longitudinal direction and according to a pitch that corresponds to that between the axes of the threaded holes (15.1) of said key (15),
g) said key (15) is inserted in the respective groove (14) of said first linear guide beam (11), so that:
- the screws (16) mounted in the same key are arranged according to axes parallel to the transverse direction with respect to said groove (14),
- a part of the stem of each of said screws (16) is contained in said same groove (14), while substantially the remaining part of the stem and the head are housed in the opposite groove (14) located in the other of said juxtaposed linear guide beams (11),
- the head of each of said screws (16) corresponds to a respective mounting through hole (17) provided in the other of said juxtaposed linear guide beams (11);
h) a clamping key tool (c) is inserted into said guide cavity (11.3) of said other linear guide beam (11) and an appropriately shaped end thereof is made to pass through each of said mounting holes (17), so as to engage the corresponding head of one assembly screw (16) at a time, and
i) operating said tool (C) each assembly screw (16) is appropriately clamped, so as to mutually connect said two juxtaposed hollow linear guide beams (11), coupling them integrally and in parallel according to said longitudinal axis, forming a structural body (10.2).

9. The process according to claim 7 and/or 8, **characterized in that** said two slide assemblies (13) of said two linear motion single guide units (10.1) are mutually coupled, side by side, in parallel and integrally.

10. The process according to claim 9, **characterized in that** it comprises the steps wherein:
- at least one block (18), composed of a metal bar provided with assembly through holes (18.1) corresponding, in position, with respective threaded holes (13.4) provided in the carriages (13.1) of said two slide assemblies (13), is arranged bridging said coupled slide assemblies (13), and
- corresponding assembly screws (18.2) are inserted through said holes (18.1) of said at least one block (18) and are clamped in said holes (13.4) of said carriages (13.1), by means of a key tool (C), so as to make said same slide assemblies (13) mutually integral.

## Patentansprüche

1. Lineardoppel führungseinheit, umfassend einen sich längs einer Längsachse erstreckenden Körper mit zwei parallel zu der besagten Achse verlaufenden Führungshohlräumen (11 3) und zwei entsprechenden gradlinigen Führungsschienen (12) von denen jede parallel zu dieser Achse an einer Wand (11 1) eines entsprechenden Führungshohlraums (11 3) befestigt ist, und umfassend mindestens eine längs der besagten zwei geradlinigen Führungsschienen (12) gleitend montierte Schlittengruppe (13) und aufnehmend mindestens einen karrenförmigen Teil (13 1) und mindestens zwei Wagen (13.20), die fest mit dem besagten Karren verbunden und jeweils durch Gleiten längs einer entsprechenden gradlinigen Führungsschiene engagiert sind,
dadurch gekeinzeichnet, dass
sie zwei einzelne Linearführungseinheiten (10 1) umfasst die parallel zueinander angeordnet sind, wobei jede Folgendes umfasst
- ein hohles Strukturelement, das sich längs einer Längsachse erstreckt, im Folgenden linearer Führungsträger (11) genannt die einen entsprechenden Führungshohlraum (11 3) begrenzt;
- eine geradlinige Führungsschiene (12) die parallel zu der besagten Achse verlauft und an de Rückwand (11 1) im Inneren des besagten Führungshohlraums (11.3) befestigt ist und
- eine Schlittengruppe (13), die längs der besagten Führungsschiene (12) gleitend montiert ist und einen karrenförmigen Teil (13.1) und mindestens einen Wagen (13 20) einschließt, der fest mit dem besagten Karren verbunden und durch Gleiten in Bezug auf die besagte Führungsschiene engagiert ist;
und **dadurch gekennzeichnet, dass**
die besagten zueinander angeordneten zwei einzelnen Linearführungseinheiten (10.1) ein Strukturelement (10 2) bilden, wobei die besagten hohlen Linearführungsträger 11) nebeneinander liegen und Seite an Seite abbaubar befestigt sind, und sich pa allel längs der besagten Längsachse erstrecken.

2. Vorrichtung gemäß Anspruch 1 **dadurch gekennzeichnet, dass**:
- jede einzelne Linearführungseinheit (10 1) eine strukturell autonome Einheit bildet und eine der beiden entsprechenden hohlen Linearführungsträger (11) umfasst;
- jeder Linearführungsträger (11) eine geradlinige Führungsschiene (12) umfasst, die sich parallel zu der besagten Längsachse erstreckt und in Bezug auf die besagte Rückwand (11 1) des Trägers selbst abbaubar befestigt ist;
- in jeder einzelnen Linearführungseinheit (10.1) eine entsprechende Schlittengruppe (13) längs der jeweiligen Führungsschiene (12) gleitend montiert ist und eine strukturell autonome Einheit bildet, die einen karrenförmigen Teil (13 1) und mindestens einen Wagen (13 20) einschließt, der fest mit dem besagten Karren (13 1) verbunden und durch Gleiten in Bezug auf die entsprchende geradlinige Führungsschiene (12) engagiert ist.

3. Vorrichtung gemäß Anspruch 1 und/oder 2 **dadurch gekennzeichnet:**
- **dass** jeder Linearführungsträger (11) auf einer seitlichen Außenfläche von mindestens einer seiner beiden seitlichen Längswände (11.2), die den besagten Führungshohlraum (11 3) begrenzen, mindestens eine Montagenut (14) präsentiert, die sich auf ihrer gesamten Länge parallel zur Längsachse erstreckt und eine öffnung auf der besagten Außenfläche aufweist;
- **dass** in den parallel zueinander angeordneten beiden einzelnen Linearführungseinheiten (10 1) die besagten zwei hohlen Linearführungsträger (11) die jeweiligen Montagenuten (14) so aufweisen, dass sie jeweils zu zweit gegenüberliegen, wobei ihre Öffnungen im Wesentlichen miteinander übereinstimmen;
- durch gekennzeichnet, dass:
- in mindestens einer Längsnut (14) eines ersten de besagten nebeneinanderliegenden Fuhrungstrager (11) ein entsprechender Längskeil (15) untergebracht ist, der gegen Herausziehen in Querrichtung der Nut selbst verhindert ist;
- in dem besagten Keil (15) Gewindelöcher (15 1) angeordnet sind, deren Achsen in Längsrichtung jeweils in einem gewisseen Abstand liegen und in Verrichtung zu dieser Nut (14) in die der Keil (15) eingesetzt ist, parallel verlaufen;
- in den besagten Gewindelöchern (15.1) die Schäfte der entsprechenden Montageschrauben (16) teilweise verschraubt sind, so dass diese im Wesentlichen mit dem verbleibenden Teil ihres Schaftes und ihres Kopfes die Nut (14) die der im anderen der beiden nebeneinanderliegenden Linearführungsträger (11) gegenüberliegt, zum Teil einnehmen;
und **dadurch gekennzeichnet dass**:
- in der Seitenwand (11 2) die der anderen der besagten zwei nebeneinanderliegenden Linearführungsträger (11) gegenüberliegt, langs der Nut (14) die der des besagten ersten Linearfürungsträgers (11) entspricht, in der der besagte Keil (15) untergebracht ist, eine Anordnung durchgehender Montagelocher (17) in der Querachse vorgesehen ist, die auf der einen Seite mit dem Führungshohlraum (11 3) des besagten anderen Linearfuhrungst rägers (11) und auf der anderen Seite mit der Nut (14) selbst in Verbindung stehen
- die Achsen der besagten Löcher (17) jeweils in Längsrichtung in einem gewissen Abstand liegen, wobei der Abstand der dem der Achsen der Locher (15 1) des besagten Keils (15) entspricht, und die Löcher (17) einer jeden Anordnung von Löchern den Köpfen der besagten Schrauben (16) die die Nut (14) in de die Löcher münden, in Anspruch nehmen, axial entsprechen, so dass die entsprechend angezogenen besagten Montageschrauben (16) jeweils die besagten zwei hohlen Linearführungsträger (11) fixieren und sie miteinander in fest verbundener Zusammenstellung und parallel längs der besagten Längsachse verbinden, und einen einzigen Strukturkörper (10.2) realisieren.

4. Vorrichtung gemäß einer oder mehrerer der vorhergehenden Ansprüche, **dadurch gekennzeichnet, dass** die besagten Schlittengruppen (13) der besagten zwei einzelnen Linearführungseinheiten (10 1) Seite an Seite, parallel und fest durch Mittel (18 18 1 18 2 13 1 13 2 13 4) zur Verbindung derselben abbaubar zueinander angeordnet sind.

5. Vorrichtung gemäß Anspruch 4 **dadurch gekennzeichnet dass** :
- jede Schlittengruppe (13) auf dem oberen Teil ihres Karrens (13.1) mindestens eine Nut (13 2) aufweist;
- in jeder Nut (13 2) ein entsprechendes Ende eines jeweiligen Einsatzes (18) eingefügt ist, der als Brücke de beiden fest miteinander verbundenen Schlittengruppen (13) angeordnet ist und mit durchgehenden Montagelöchern (18 1) mit einer im Wesentlichen vertikalen Achse versehen ist, die der Lage nach den jeweiligen Gewindelöchern (13.4), die in jedem Karren (13.1) der Schlittengruppe (13) selbst vorhanden sind, entsprechen;
- entsprechende Montageschrauben (18.2) durch die besagten Löcher (18.1) der Einsätze (18) eingefügt sind und in den besagten Löchern (13 4) angezogen werden so dass die besagten Schlittengruppen (13) selbst durch die besagten Einsätze (18) rest verbunden werden.

6. Vorrichtung gemäß Anspruch 4 und/oder 3 **dadurch gekennzeichnet dass** Steuerungs- und Übertragungsmittel (19 20) der linearen Bewegung in nur einer der besagten beiden Linearführungseinheiten (10 1) vorhanden sind deren Schlittengruppe (13) die Schlittengruppe (13) der fest miteinander verbundenen anderen Führungseinheit (10 1) mitzieht.

7. Produktionsverfahren einer Lineardoppelführungseinheit, mit integrierter Linearübertragung gemäß einer oder mehrerer der vorhergehenden Ansprüche, **dadurch gekennzeichnet, dass** zwei einzelne Linearführungseinheiten (10 1) miteinander parallel fest verbunden werden wobei jede umfasst
- ein hohles Strukturelement, das sich längs eine Längsachse erstreckt, im Folgenden Linearführungsträger (11) genannt der einen entsp echenden Führungshohlraum (11 3) begrenzt,
- eine geradlinige Führungsschiene (12) die parallel zu der besagten Achse verläuft und an der Rückwand (11 1) im Inneren des besagten Führungshohlraums (11 3) befestigt ist, und
- eine Schlittengruppe (13) die längs der besagten Führungsschiene (12) gleitend montiert ist und einen karrenförmigen Teil (13.1) und mindestens einen Wagen (13 20) einschließt, de fest mit dem besagten Karren verbunden und durch Gleiten in Bezug auf die besagte Führungsschiene engagiert ist, und es wird ein Strukturelement (10 2) gebildet wobei die besagten beiden hohlen Linearführungstrager (11) nebeneinander liegen und Seite an Seite parallel längs der besagten Längsachse abbaubar befestigt sind

8. Verfahren gemäß Anspruch 7 dadu ch gekennzeichnet, dass es die Phasen umfasst, bei denen:
a) zwei hohle Linearführungsträger (11) realisiert weeden, wobei in jeder:
- eine Ruckwand (11 1) und zwei Seitenwände (11 2) gebildet werden die einen Führungshohlraum (11 3) begrenzen, und
- auf mindestens einer Außenseite einer ihrer seitlichen Längswände 11 2) mindestens eine Montagenut (14) gebildet wird, die ihrer ganzen Länge nach parallel zur besagten Längsachse verläuft und ihr e Öffnung auf de besagten Seite aufweist;
b) die besagten zwei hohlen Linearführungsträger (11) Seite an Seite, parallel in Bezug auf die besagte Langsachse nebeneinander liegen, so dass sich die jeweiligen Nuten (14) paarweise entsprechen und die Öffnungen der Nutpaare übereinstimmen
c) ein Keil (15) mit einer Länge realisiert wird, die im Wesentlichen der eines jeden Linearführungsträgers (11) entspricht und mit eine Form, die geeignet ist, um in einer entsprechenden Nut (14) eines ersten der besagten nebeneinander liegenden Linearführungsträger (11) zu lagern und gegen Herausziehen in Querrichtung der Nut selbst verhindert zu sein
d) der besagte Keil (15) mit einer Anordnung von Gewindelöchen (15 1) versehen ist, deren Achsen jeweils in Längsrichtung in einem gewissen Abstand liegen;
e) in der besagten Anordnung von Gewindelöchern (15.1) eine entsprechende Anordnung von Montageschrauben (16) montiert wird, deren Schäfte jeweils zum Teil in diesen Gewindelöchern (15 1) ver schraubt sin;
f) in der Seitenwand (11 2), die der anderen der besagten zwei nebeneinanderliegenden Linearfüh rungstäger (11) gegenüberliegt langs jede Nut (14) eine entsprechende Anordnung durchgehender Montagalöcher (17) vo gesehen ist, die auf der einen Seite mit dem Führungshohlraum (11 3) des besagten anderen Linearführungsträgers (11) und auf der anderen Seite mit der entsprechenden Nut (14) selbst in Verbindung stehen, und deren Achsen jeweils in Längsrichtung in einem gewissen Abstand liegen, wobei der Abstand dem zwischen den Achsen der Gewindelöcher (15 1) des besagten keils (15) entspricht
g) der besagte keil (15) in die jeweilige Nut (14) des besagten ersten Linearführungsträgers (11) eingefügt wird so dass
- die in den Keil selbst montierten Sch rauben (16) längs von Achsen angeo rdnet sind, die parallel zur Querrichtung in Bezug auf die besagte Nut (14) verlaufen
- ein Teil des Schaftes jeder der besagten Schrauben (16) in der besagten Nut (14) selbst zurückgehalten wird, wahrend der verbleibende Teil des Schaftes und der Kopf im Wesentlichen in de gegenüberliegen den Nut (14) die sich im anderen der besagten nebeneinanderliegenden Linearführungsträger (11) befindet, untergebracht ist;
- der kopf jeder der besagten Schrauben (16) einem jeweiligen durchgehenden Montageloch (17) das in dem anderen der besagten nebeneinanderliegenden Linear führungsträger (11) vorgesehen ist, entsp richt;
h) ein Werkzeugschlüssel zum Festschrauben (C) in den besagten Führungshohl aum (11 3) des besagten anderen Linearführungst ägers (11) eingesteckt wird und eines seiner entsprechend geformten Enden durch jedes der besagten Montagelöcher (17) hindurchgeführt wird so dass jeweils der entsprechende Kopf einer Montageschraube (16) in Anspruch genommen wird, und
i) bei Betätigung des besagten Werkzeugschlüssels (C) jede Montageschraube (16) zweckmäßig angezogen wird, so dass die besagten zwei nebeneinanderliegenden hohlen Linearführungsträger (11) in Verbindung gebracht und parallel längs der besagten Langsachse fest verbunden werden, wobei sie einen Strukturkörper (10 2) bilden

9. Verfahren gemäß Anspruch 7 und/oder 8 **dadurch gekennzeichnet, dass** die besagten zwei Schlittengruppen (13) de beiden zwei einzelnen Linearführungseinheiten (10.1) Seite an Seite parallel und fest miteinander verbunden werden,

10. . Verfahren gemäß Anspruch 9, **dadurch gekennzeichnet, dass** es die Phasen umfasst, bei denen:
- mindestens ein Einsatz (18), bestehend aus einem Metallstab, der mit durchgehenden Montagelochern (18.1) ausgestattet ist, die der Lage nach den jeweiligen im Karren (13.1) der besagten beiden Schlittengruppen (13) vorhandenen Gewindelöchern (13.4) entsprechen, als Brücke der besagten fest verbundenen Schlittengruppen (13) angeordnet wird, und
- entsprechende Montagesehrauben (18.2) durch die besagten Löcher (18.1) des besagten mindestens einen Einsatzes (18) eingefugt und in den besagten Löchern (13.4) der besagten Karren (13.1) mittels eines Werkzeugschlussels (C) angezogen werden, so dass die besagten Schlittengruppen (13) selbst miteinander fest verbunden werden.

## Revendications

1. Dispositif a double unité de guidage à déplacement linéaire, comprenant un corps disposé selon un axe longitudinal et qui présente deux cavités de guidage (11 3) parallèles audit axe, et deux guides rectilignes respectifs à monorail (12) qui sont chacun fixés parallèlement audit axe sur une paroi (11 1) d'une cavité de guidage corr espondante (11.3) et comprenant au moins un groupe à glissière (13) monté de manière coulissante le long desdits deux guides rectilignes (12) et incluant au moins une partie à chariot principal (13.1) et au moins deux chariots (13.20) solidai es avec ledit chariot principal et qui sont chacun engagés par coulissement le long d'un guide rectiligne respectif à monorail,
**caractérisé par le fait qu'**il
inclut deu unités individuelles de guidage à deplacement linéaire (10 1) accouplées entre elles en para llèle et comprenant chacune:
- un élément structurel creux dispose selon un axe longitudinal par la suite nommé poutre linéaire de guidage (11) delimitant une cavité de guidage respective (11 3)
- un guide rectiligne à monorail (12), parallèle audit axe et fixé sur la paroi de fond (11 1) a l'intérieur de ladite cavité de guidage (11 3) et
- un groupe à glissière (13) monté de manière coulissante le long dudit guide a monorail (12) et incluant une partie a chariot principal (13 1) et au moins un chariot (13 20) solidaire dudit chariot principal et engagé par coulissement par rapport audit guide a monorail,
et **par le fait que**
lesdites deux unités individuelles de guidage a déplacement linéaire (10 1) accouplées entre elles forment un corps structurel (10 2), dans lequel lesdites poutres creuses de guidage linéaire (11) sont juxtaposées entre elles et fixées côte a côte de manière démontable, et sont disposées parallèlement selon ledit axe longitudinal

2. Dispositif selon la revendmation 1 **caractérisé par le fait que**
- chaque unité individuelle de guidage a deplacement linéaire (10 1) constitue une entité structurellement autonome et comprenant une poutre respective desdites deux pout es creuses de guidage linéaire (11)
- chaque poutre linéaire de guidage (11) comprend un guide rectiligne à monorail (12) disposé parallèlement audit axe longitudinal et fixé de manière démontable, par rapport à ladite paroi de fond (11 1) de la même poutre;
- dans chaque unité individuelle de guidage à déplacement linéaire (10 1) un gr oupe correspondant a glissière (13) est monté de manière coulissant le long du guide à monorail respectif (12) et constitue une entité structurellement autonome incluant une partie a chariot principal (13.1) et au moins un chariot (13.20) solidaire avec ledit chariot principal (13.1) et engagé par coulissement par rapport au guide rectiligne correspondant à monorail (12)

3. Dispositif selon les revendications 1 et/ou 2 **caractérisé:**
- **par le fait que** chaque poutre de guidage linéaire (11) présente, sur une face latérale extérieure d au moins une de ses deux parois latérales longitudinales (11.2) délimitant ladite cavité de guidage (11 3) au moins une rainure d' assemblage (14), disposée sur toute sa longueur parallèlement audit axe longitudinal et présentant une ouverture sur ladite face extérieure,
- **par le fait que** dans lesdites deux unités individuelles de guidage a déplacement linéaire (10 1) accouplées entre elles en parallèle, lesdites deux poutres creuses de guidage linéaire (11) présentent les rainures d'assemblage respectives (14) opposées deux pa deux et avec leurs ouvertures substantiellement coïncidentes,
- **par le fait que**
- dans au moins une rainure longitudinale (14) d une première desdites deux poutres linéaires de guidage (11) juxtaposées se trouve une clavette longitudinale respective (15) dont l'extraction est empêchée dans la direction transversale de la rainure même
- dans ladite clavette (15) se trouve une disposition de trous filetés (15 1) dont les axes sont réciproquement espacés dans la direction longitudinale et sont orientés parallèlement a la direction transversale pa rapport à ladite rainure (14) dans laquelle la clavette (15) est introduite ;
- dans lesdits trous filetés (15 1) sont partiellement vissées les tiges de vis d'assemblage correspondantes (16), qui substantiellement avec la partie restante de leur tige et leur tête, occupent partiallement la rainure (14) opposée dans l'autre desdites deux poutres linéaires de guidage (11) juxtaposées et **par le fait que**
- dans la paroi latérale (11 2) opposée de l'autre desdites deux poutres linéaires de guidage (11) juxtaposées, le long de la rainure (14) correspondant a celle de ladite première poutre linéaire de guidage (11) ou est logée ladite clavette (15) une disposition de trous passants de montage (17) est prévue, avec axe transversal, lesquels communiquant, d un côté, avec la cavité de guidage (11 3) de ladite autre poutre linéaire de guidage (11) et, de l'autre côte, avec la rainure (14) même
- les axes desdits trous (17) sont récipro quement espacés dans la direction longitudinale, avec un pas correspondant a celui des axes des trous (15 1) de ladite clavette (15), et les trous (17) de chaque disposition de trous correspondent axialement aux têtes desdites vis (16) qui engagent la rainure (14) dans laquelle les trous débouchent,
de sorte que lesdites vis d'assemblage (16) opportunément serrées fixent réciproquement lesdites deux poutres creuses linéaires de guidage (11) les reliant entre elles en association solidaire et en parallèle selon ledit axe longitudinal, réalisant ainsi un corps structurel unique (10 2)

4. Dispositif selon une ou plusieurs des revendications précédentes, **caractérisé par le fait que** lesdits groupes à glissière (13) desdites deux unités individuelles de guidage a déplacement linéaire (10 1) sont associés entre eux côte a côte, en parallèle et de manière solidaire, à 1 aide de moyens (18 18 1 18 2 13 1 13 2 13 4) d union desdits groupes de manière démontable

5. Dispositif selon la revendication 4 **caractérisé par le fait que**
- chaque groupe à glissière (13) présente dans la bande supérieure de son chariot principal (13 1) au moins une rainure (13 2)
- dans chaque rainure (13.2) est introduite une extrémité correspondante d une cheville respective (18) disposée en pont entre les deu< groupes à glissière (13) associés et doté de trous passants d assemblage (18 1) dont 1 axe est essentiellement vertical et correspondants par leur position aux trous filetés respectifs (13 4) prévus dans chaque chariot principal (13 1) du groupe à glissière (13) même ;
- des vis d'assemblage correspondantes (18 2) sont introduites, à travers lesdits trous (18 1) des chevilles (18) et sont serrées dans lesdits trous (13 4) de manière à rendre solidaire entre eux lesdits groupes à glissière (13) par 1 intermédiaire desdites chevilles (18)

6. Dispositif selon les revendications 4 et/ou 5 **caractérisé par le fait que** des moyens (19 20) de commande et de transmission du mouvement linéaire sont prévus dans une seule desdites deux unités individuelles de guidage à déplacement linéaire (10.1), dont le groupe à glissière (13) entraîne en mouvement solidaire le groupe à glissière (13) de l'autre unité de guidage (10 1) associée.

7. Procède de fabrication d un dispositif à double unité de guidage a déplacement linéaire, avec transmission intégrée à déplacement linéaire, selon une ou plusieurs des revendications précédentes **caractérisé par le fait que** deux unités individuelles de guidage à déplacement linéaire (10 1) sont associées entre elles en patalléle et comprennent chacune
- un élément structurel creux disposé selon un axe longitudinal, par la suite nomme poutre alinéaire de guidage (11) delimitant une cavité de guidage (11 3)
- un guide rectiligne a monorail (12), parallèle audit axe et fixé sur la paroi de fond (11.1) a l'intérieur de ladite cavité de guidage (11 3) et
- un groupe à glissière (13) monté de manière coulissante le long dudit guide a monorail (12) et incluant une partie à chariot principal (13 1) et au moins un chariot (13 20) solidaire avec ledit chariot principal et engagé par coulissement par rapport audit guide à monorail,
et qu'un corps structurel (10 2) est formé, dans lequel lesdites deux poutres creuses de guidage linéaire (11) sont juxtaposées entre elles et fixées côte à côte, parallèlement selon un axe longitudinal de manière démontable.

8. Procédé selon la revendication 7 **caractérisé par le fait qu** il comprend les phases dans lesquelles :
a) sont réalisées deux poutres creuses de guidage linéaire (11) dans chacune desquelles
- une paroi de fond (11 1) et deux parois latérales (11 2) sont formées, lesquelles délimitent une cavité de guidage (11 3) et
- sur au moins une face extérieure de 1 une de leurs parois latérales longitudinale (11 2) est formée au moins une rainure d assemblage (14) qui parcourt toute sa longueur parallèlement audit axe longitudinal et présente son ouverture sur ladite face
b) lesdites deux poutres creuses de guidage linéaire (11) sont juxtaposées côte à côte en parallèle selon ledit axe longitudinal de sorte que les rainures respectives (14) correspondent encre elles par paires et que les ouvertures des paires de rainures coïncident ;
c) une clavette (15) est réalisée avec une longueur substantiellement correspondante a celle de chacun poutre linéaire de guidage (11) et une forme adaptée pour se loger dans une rainure respective (14) d une première desdites deux poutres linéaires de guidage (11) juxtaposée et pour être empêchée contre son extraction dans la direction transversale de la rainure même
d) ladite clavette (15) est dotée d une disposition de trous filetés (15 1) dont les axes sont réciproquement espacés dans la direction longitudinale,
e) dans ladite disposition de trous filetés (15 1), une disposition de vis d'assemblage (16) est montée dont les tiges sont respectivement et partiellement vissées dans lesdits trous filetés (15 1)
f) dans la paroi latérale (11.2) opposée de l'autre desdites deux poutres linéaires de guidage (11) juxtaposées, le long de chaque rainure (14), une disposition correspondante de trous passants de montage (17) est prévue, lesquels communiquent, d'un côté, avec la cavité de guidage (11 3) de ladite autre poutre linéaire de guidage (11) et de 1 autre côté avec la rainure correspondante (14) et dont les axes sont réciproquement espacés dans la direction longitudinal et selon un pas qui correspond au pas entre les axes des trous filetés (15 1) de ladite clavette (15),
g) ladite clavette (15) est introduite dans la rainure respective (14) de ladite première poutre linéaire de guidage (11), de sorte que
- les vis (16) montées dans la clavette même sont disposées selon des axes parallèles a la direction transversale par rapport à ladite rainure (14),
- une partie de la tige de chacune desdites vis (16) est contenue dans ladite rainure (14), tandis que la partie estante de la tige et la tête se logent substantiellement dans la rainure (14) opposée qui se trouve dans l'autre desdites poutres linéaires de guidage (11) juxtaposées,
- la tête de chacune desdites vis (16) correspond à un trou passant de montage respectif (17) prévu dans l'autre desdites poutres linéaires de guidage (11) juxtaposées,
h) un outil à clé de serrage (C) est introduit dans ladite cavité de guidage (11 3) de ladite autre poutre linéaire de guidage (11) et l'une de ses extrémités opportunément façonnée est passée à travers chacun desdits trous de montage (17) de manière à engager la tête correspondante d'une vis d'assemblage (16) a la fois, et
i) en actionnant ledit outil (c) on serre opportunément chaque vis d assemblage (16), de manière à relier entre elles lesdites deux poutres linéaires de guidage creuses (11) juxtaposées, en les associant de manière solidai e et en parallèle selon ledit axe longitudinal, formant ainsi un corps structurel (10 2)

9. Procédé selon les revendications 7 et/ou 8, **caractérisé par le fait que** lesdits deux groupes à glissière (13) desdites deux unités individuelles de guidage a déplacement linéaire (10.1) sont associes entre eux côte à côte, en parallèle et de manière solidaire.

10. Procédé selon la revendication 9, **caractérisé par le fait qu'**il comprend les phases dans lesquelles
- au moins une cheville (18) composée d'une barrette métallique dotée de trous passants d'assemblage (18.1) correspondant par position, aux trous filetés respectifs (13 4) prévus dans les chariots principaux (13.1) desdits deux groupes à glissière (13), est disposée en pont entre lesdits groupes à glissière (13) associés, et
- des vis d assemblage correspondantes (18 2) sont introduites à travers lesdits trous (18 1) de ladite cheville (18) et sont serrées dans lesdits trous (13 4) desdits chariots principaux (13 1) à l'aide d un outil a clé (C), de manière à rendre solidaire entre eux lesdits groupes à glissière (13).
